# EUROPEAN PATENT SPECIFICATION

(11) **EP 2 984 416 B1**
(45) Date of publication and mention of the grant of the patent: **17.02.2021**
(21) Application number: 14728291.7
(22) Date of filing: 09.04.2014
(51) Int. Cl.: F24H 9/14, F24H 9/02, F24D 3/10, F24D 3/08, F24D 10/00

(54) **UNIT FOR DISTRIBUTING FLUIDS**
EINHEIT ZUR VERTEILUNG VON FLÜSSIGKEITEN
UNITÉ DE DISTRIBUTION DE FLUIDES

(30) Priority: 10.04.2013 IT TO20130289; 29.11.2013 IT TO20130972
(43) Date of publication of application: 17.02.2016
(73) Proprietor: Ferrero, Riccardo, 12060 Farigliano (CN) (IT)
(72) Inventor: Ferrero, Riccardo, 12060 Farigliano (CN) (IT)
(74) Representative: Robba, Pierpaolo
(86) International application number: PCT/IB2014/060549
(87) International publication number: WO 2014/167505

(56) References cited:
- EP-A2- 1 944 554
- WO-A1-89/09368
- WO-A1-2009/098991
- DE-A1-102008 033 063

## Description

### Technical Field

The present invention relates to a unit for distributing fluids.

More specifically, the invention relates to a unit for distributing fluids according to the preamble of appended claim 1.

### Prior Art

Use of a unit for distributing fluids according to the preamble of appended claim 1 is known in the field.

A first example of such a unit for distributing fluids is disclosed in the international Patent Application WO2012120455 in the name of the same Applicant. A second example of a unit for distributing fluids which assist in reducing the overall size of the unit and in creating a modular structure that can be assembled in different manners is disclosed in EP 1 944 554. Still another example of such a unit is disclosed in DE 10 2008 033063 on which the preamble of claim 1 is based.

The units for distributing fluids of the above kind are frequently employed in the field of the so-called "domotics", for automating heat management in rooms. Actually, the distributing units, also known in the art under the commercial name of "user satellites" (also referred to in English language as "heating boxes"), comprise sets of tubes, fittings, valves and hydraulic devices previously assembled and contained in a housing capable of simplifying the installation in domestic hydraulic plants.

A technical problem of the known unit for distributing fluids is when the heating system is turned off and it is desired to proceed with the generation of sanitary heated water in a very short time.

In this case, the problem lies in the fact that, as the water in the pipe has cooled, hot water is not delivered immediately at the opening of the taps, but one must wait until the cooled water is discharged from the pipes before hot water is delivered.

In the known unit for distributing fluids this problem is solved by making hot water circulate continuously inside the unit, thus causing, however, a considerable waste of energy. Another technical problem of the known unit for distributing fluids is caused by the need to install the unit in small spaces and by the precision required in cutting the pipes when they are connected to the hydraulic system.

In general, the Applicant has observed that the prior art is not able to effectively solve the above problems.

### Summary of the Invention

It is an object of the present invention to provide a unit for distributing fluids which solves the problem of generating sanitary heated water in a very short time, with a saving of energy used with respect to the solutions adopted in the prior art.

A further object of the present invention is to provide a unit for distributing fluids that is modular and solves the problem of installing the unit in small spaces without requiring great precision in the cutting of the pipes when making the connection to the hydraulic system, with compensation of errors in the cut.

According to the present invention, the above and other objects are achieved by means of a unit for distributing fluids of the kind mentioned above, as defined in claim 1. The dependent claims define preferred embodiments of the invention.

It is to be understood that the appended claims are integral part of the technical teachings provided herein in the present description in respect of the invention.

### Brief Description of the Drawings

Further features and advantages of the invention will become apparent from the following detailed description, given only by way of non-limiting example, with reference to the accompanying drawings, in which:
- Fig. 1 is a front elevation of an exemplary embodiment of a unit for distributing fluids according to the present invention;
- Fig. 2 is a front elevation of a second exemplary embodiment of a unit for distributing fluids not showing all the features according to the present invention; and
- Fig. 3 is a front elevation of a further exemplary embodiment of a unit for distributing fluids not showing all the features according to the present invention.

### Description of Preferred Embodiments of the invention

Referring to the figures, reference numerals 10, 10a and 10b denote exemplary embodiments of a unit for distributing fluids according to the present invention.

Unit 10, 10a and 10b includes a main housing 12 internally enclosing a sanitary cold water supply pipe 14, a heating circuit 16 and a sanitary heated water supply pipe 11.

The sanitary cold water supply pipe 14 comprises a first inflow segment 20 arranged to be connected, at its inlet, with a source of sanitary water under pressure and a first distribution segment 22 intended to deliver cold sanitary water. For instance, the source of sanitary water under pressure is a pipe connected with the water mains. The pipe can suitably come from a condominial riser.

The sanitary heated water supply pipe 11 comprises a second inflow segment 27 arranged to be connected, at its inlet, with a source of heated sanitary water under pressure and a second distribution segment 24 intended to deliver heated sanitary water. For instance, the source of heated sanitary water under pressure is a pipe connected with a boiler. The pipe can suitably come from a condominial riser.

Preferably, unit 10, 10a and 10b includes stop members, e.g. stop valves 21 and 33, located at the inlets of the first and the second inflow segments 20, 27 of the supply pipes 14 and 11, respectively. For instance, the stop valves are ball valves 21 and 33 of a kind known per se. In the exemplary embodiment illustrated, ball valves 21 and 33 are provided with respective associated operating levers (not associated with reference numerals), which can be manually rotated by a user and are connected to a rotary shutter.

Preferably, unit 10, 10b further includes further stop members, e.g. further stop valves 23 and 25, located at the inlets of the first and the second distribution segments 22 and 24, respectively. For instance, the stop valves are ball valves 23 and 25 of a kind known per se. In the exemplary embodiment illustrated, ball valves 23 and 25 are provided with respective associated operating levers (not associated with reference numerals), which can be manually rotated by a user.

Heating circuit 16 is arranged to be connected with a source of heat carrier fluid under pressure. For instance, the source of heat carrier fluid under pressure is a pipe connected with a boiler. The pipe can suitably come from a condominial riser.

According to the invention, unit 10, 10a and 10b includes an inner housing 26 made of a thermally insulating material. Inner housing 26 is enclosed within main housing 12 and in turn internally encloses heating circuit 16, second inflow segment 27 and the second distribution segment 24, while leaving the first distribution segment 22 and the portion of inflow segment 20 located upstream the first distribution segment 22 outside.

Thanks to such features, unit 10, 10a and 10b allows avoiding an undesired heat transfer from heating circuit 16 and sanitary heated water supply pipe 11 to the first distribution segment 22. In this manner, not only heating of the heated sanitary water intended to be delivered by the second distribution segment 24 is made more effective, but at the same time cold sanitary water intended to be delivered by the first distribution segment 22 is prevented from undergoing a temperature increase, which situation is troublesome in particular in summer time.

Preferably, inner housing 26 is made of a polymeric material with thermally insulating properties, for instance polyurethane foam, closed cell polyethylene foam and the like.

In further preferred manner, inner housing 26 is box shaped.

Preferably, the first distribution segment 22 and the portion of the first inflow segment 20 located upstream the first distribution segment are located near a first side face 26a of inner housing 26, which face is different and separate from the region through which the heating circuit 16 and the sanitary heated water supply pipe 11 open to the outside. This feature allows improving the thermal insulation obtained by using inner housing 26.

As it can be seen in the figures, the first distribution segment 22 and at least the portion of the first inflow segment 20 located upstream the first distribution segment 22 are located substantially opposite the first face 26a and preferably parallel thereto.

According to the invention, heating circuit 16 includes a delivery segment 28 arranged to be hydraulically connected, at its inlet, with the source of heat carrier fluid, and a return segment 30 arranged to be hydraulically connected, at its outlet, with the source of heat carrier fluid. Delivery segment 28 is capable of introducing into heating circuit 16 heat carrier fluid at a sufficient temperature for supplying the desired heat amount to an external heating system. Conversely, return segment 30 is capable of returning the heat carrier fluid that has been cooled after having undergone a heat exchange with the external heating system. Advantageously, delivery segment 28 and return segment 30 open to the outside at a second side face 26b of housing 26, different from the first face 26a, for instance arranged substantially perpendicularly to the latter. Optionally, delivery segment 28 and return segment 30 are substantially parallel to each other.

Preferably, unit 10, 10a and 10b further includes a valve assembly 29 and an additional stop member, for instance an additional stop valve 31, located at the inlets of delivery segment 28 and return segment 30, respectively. For instance, the additional stop valve is a ball valve 31 of a kind known per se. In the exemplary embodiment illustrated, ball valve 31 is provided with an associated operating lever (not associated with a reference numeral), which can be manually rotated by a user. In the illustrated embodiment, valve assembly 29 is made as disclosed in Italian Patent Application n. TO2010A000903 filed by the same Applicant. Preferably, stop valves 25 and 33 are located within the inner housing 26. More preferably, stop valves 25 and 33 are located on the same side as the second side face 26b of the inner housing 26.

Optionally, stop valves 25 and 33 pass through the inner housing 26.

Preferably, valve assembly 29 and additional stop valve 31 are located within the inner housing 26. More preferably, valve assembly 29 and additional stop valve 31 are located on the same side as the second side face 26b of the inner housing 26.

Optionally, valve assembly 29 and additional stop valve 31 pass through the inner housing 26.

Preferably, unit 10, 10 and 10b includes a first meter or counter for fluids, for instance a first litre counter 38, located in the sanitary cold water supply pipe 14. In the illustrated embodiment, the first meter or first litre counter 38 is located in the first inflow segment 20 upstream the first distribution segment 22.

According to the invention, unit 10, 10 and 10b includes a second meter or counter for fluids, for instance a second litre counter 39, located in the sanitary heated water supply pipe 11. In the illustrated embodiment, the second meter or second litre counter 39 is located in the second inflow segment 27 upstream the second distribution segment 24.

Further, heating circuit 16 preferably includes an outlet branch segment 42 hydraulically located downstream delivery segment 28 and arranged to be connected upstream one or more radiator devices of the external heating system. Moreover, heating circuit 16 may include a partition valve assembly 44 arranged to control the flow of primary hot water entering the outlet branch segment 42. For instance, the partition valve assembly includes a two-way partition valve 44, of a type known per se to the skilled in the art, connected downstream delivery segment 28 and upstream the outlet branch segment 42. Preferably, said partition valve 44 is a motor-operated ball valve.

Clearly, the delivery segment 28, the outlet branch segment 42 and the partition valve assembly 44 are contained in the inner housing 26.

Preferably, heating circuit 16 includes an inlet branch segment 48 arranged to be hydraulically connected downstream said one or more radiator devices of the external heating system.

In the exemplary embodiments illustrated, heating circuit 16 includes a heat metering device 52 intended to calculate the heat consumed by the heat carrier fluid in order to operate the heating system. More in detail, heat metering device 52 is arranged to calculate the heat transferred to the external heating system through outlet and inlet branch segments 42, 48. More preferably, heat metering device 52 is associated with return segment 30 and is for instance located upstream additional stop valve 31. Heat metering device 52 is enclosed within inner housing 26.

Return segment 30 is hydraulically connected downstream the inlet branch segment 48. Preferably, inlet branch segment 48 is connected to return segment 30 through a T-fitting (not associated with a reference numeral) which enables the modularity of the system, adapting it to different uses in the work; the T-fitting, also, if carefully emptied serves as a buffer to stabilize the flow of water in the heat metering device 52.

Preferably, the segments of the main pipes that protrude from the main housing 12 and from the inner housing 26 at the second side face 26b, in particular the segments of the second distribution segment 24, the second inflow segment 27, the delivery segment 28, the return segment 30, the outlet branch segment 42 and the inlet branch segment 48 carrying hot fluids are inserted in the inner housing 26. Advantageously, thermally insulating material surrounding the portion of the pipes located outside the inner housing 26 is connected, for example is glued, to the inner housing 26, in particular it is glued to the second side face 26b. Advantageously, unit 10, 10a and 10b further includes a stop member, for instance a stop valve 43, located downstream the outlet branch segment 42 and arranged so as to be hydraulically connected upstream the external heating system (i.e. upstream the radiator devices). Also advantageously, unit 10, 10a and 10b further includes a stop member, for instance a stop valve 49, located upstream the inlet branch segment 48 and arranged so as to be hydraulically connected downstream the external heating system (i.e. downstream the radiator devices).

For instance, the stop valves are ball valves 43 and 49 of a kind known per se. In the exemplary embodiment illustrated, ball valve 43 and 49 are provided with associated operating lever (not associated with a reference numeral), respectively, which can be manually rotated by a user. Preferably, stop valve 43 is located within the inner housing 26. More preferably, stop valve 43 is located in correspondence of the second side face 26b of the inner housing 26.

Optionally, stop valve 43 pass through the inner housing 26. Preferably, stop valve 49 is located within the inner housing 26. More preferably, stop valve 49 is located in correspondence of the second side face 26b of the inner housing 26.

Optionally, stop valve 49 pass through the inner housing 26. Thanks to this feature, it is possible to optimize the space occupation in main housing 12.

In a preferred manner, the main housing 12 comprises a metal plate 77 coated with a net made, for example, of galvanized steel, and connected to one of the housing faces 12a, for example, connected to the housing lower face; moreover the metal plate 77 coated with the net covers the back of the housing.

Advantageously, the metal plate 77 coated with the net is removable during installation and allows easy access to the inside of the main housing 12 during installation; furthermore the metal plate 77 coated with the net allows an easy installation of the unit for distributing fluids 10, 10a and 10b of the invention into the wall, facilitating the adherence of the plaster.

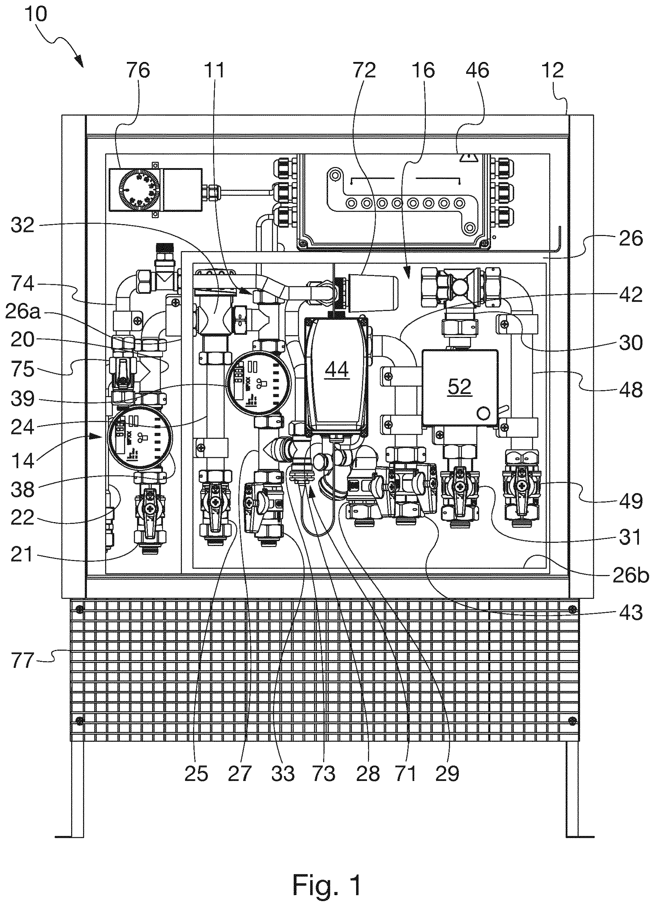

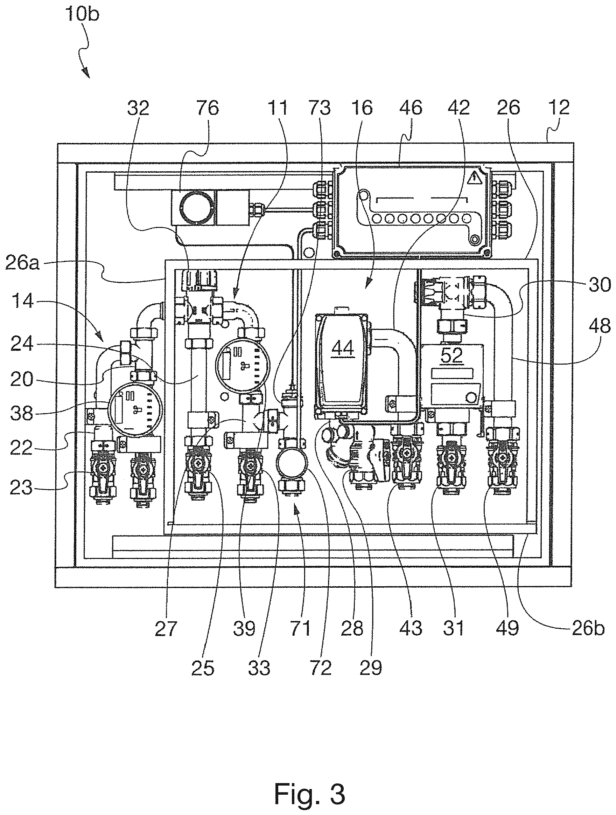

In the embodiments illustrated in figures 1 and 3 the sanitary heated water supply pipe 11 includes a mixer 32, of a type known per se to those skilled in the art, enclosed within inner housing 26 and hydraulically connected upstream the second distribution segment 24. In the embodiments illustrated in figures 1 and 3 the mixer 32 is directly connected to the second distribution segment 24 and to the second inflow segment 27. Moreover the mixer 32 is hydraulically connected downstream the first inflow segment 20 and the second inflow segment 27 and is adapted to mix the cold sanitary water from the first inflow segment 20 of the supply pipe 14 with the heated sanitary water from the second inflow segment 27 of the sanitary heated water supply pipe 11.

In the figures there are illustrated embodiments of the unit for distributing fluids of the invention which according to the invention comprises a recirculation circuit 71 connected, at its inlet, to the second inflow segment 27 and hydraulically connected, at its outlet, to the pressurized heat carrier water source.

According to the invention, the recirculation circuit 71 comprises a regulator valve 72, for example a thermoelectric valve, connected to the second inflow segment 27 and hydraulically connected, at its outlet, to the pressurized heat carrier fluid source.

Preferably, the regulator valve 72 also acts as a stop valve and is connected to an inlet junction segment 73, for example a T-fitting, connected in turn to the second inflow segment 27.

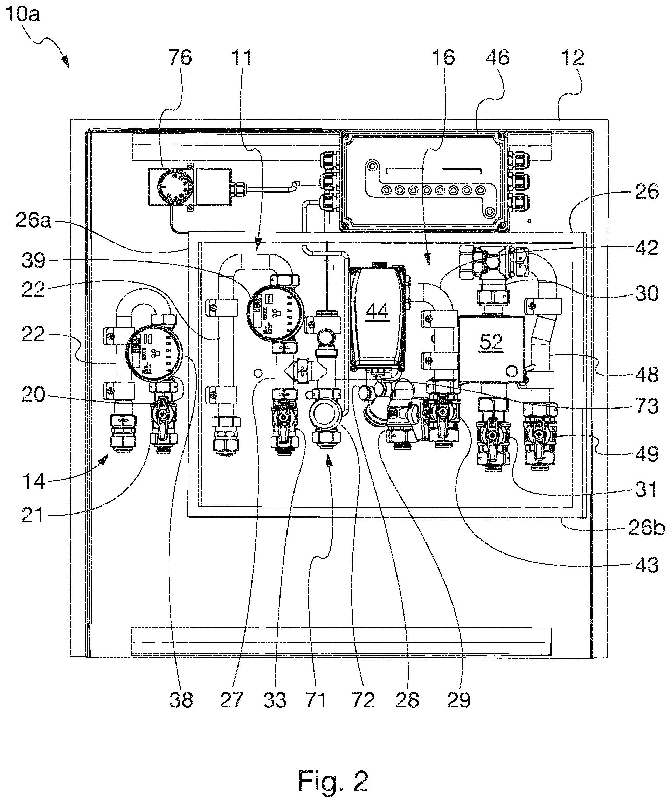

Although not shown on figures 2 and 3, according to the invention, the recirculation circuit 71 comprises an outlet junction segment 74 connected, at its inlet, to the regulator valve 72 and connected, at its outlet, to a source of heated sanitary water under pressure.

Advantageously, unit 10 further includes a stop member, for instance a stop valve 75, located downstream the outlet junction segment 74 and arranged to be hydraulically connected with the source of heated sanitary water under pressure.

For instance, the additional stop valve is a ball valve 75 of a kind known per se. In the exemplary embodiment illustrated, ball valve 75 is provided with an associated operating lever (not associated with a reference numeral), which can be manually rotated by a user.

In embodiments of the invention illustrated in the figures the recirculation circuit 71 is connected to the second inflow segment 27 upstream the second counter 39 to prevent the water that passes in the recirculation circuit from being charged to the user.

Advantageously, unit 10, 10a and 10b includes a control unit 46 connected with the partition valve 44 and with a regulator element 76 and arranged to control said partition valve 44 and the regulator valve 72 in a manner known per se in the art. In the illustrated embodiment, control unit 46 is located outside the inner housing 26 and inside main housing 12.

Preferably, control unit 46 is arranged to be connected to the heating system and to manage the functions thereof, for instance to control the recirculation circuit 71 and the radiator devices by means of thermostatic valves, chronothermostats or the like.

For example the regulator element 76 is a thermostat with capillary and bulb which commands the thermoelectric head of regulator valve 72.

The bulb constitutes the sensitive element and is arranged in the second inflow segment 27, preferably in the inlet junction segment 73.

The pipes of the unit 10, 10a and 10b are made so as to be modular; indeed, three modules are present in the embodiments illustrated in figures 1 and 3: a first module comprising the return segment 30 and the inlet branch segment 48 of the heating circuit 16; a second module comprising the delivery segment 28 and the outlet branch segment 42 of the heating circuit 16; and a third module comprising the sanitary heated water supply pipe 11, the sanitary cold water supply pipe 14 and the recirculation circuit 71.

In the embodiment illustrated in figure 2, instead, four modules are present: the first module comprising the return segment 30 and the inlet branch segment 48 of the heating circuit 16; the second module comprising the delivery segment 28 and the outlet branch segment 42 of the heating circuit 16; a third module comprising the sanitary heated water supply pipe 11 and the recirculation circuit 71; and a fourth module comprising the sanitary cold water supply pipe 14. Advantageously, this modular structure allows an easy connection of the pipes of the unit during assembly, allowing to compensate for any errors in the cutting of the tubes by moving the modules within the unit 10, 10a, 10b.

The operation of unit 10, 10a and 10b will be now briefly described.

Cold water supply pipe 14 allows inflow of non-heated (cold) sanitary water through the first inflow segment 20 and the associated stop valve 21. Litre counter 38 measures the amount of non-heated sanitary water entering unit 10, 10a and 10b.

Sanitary heated water supply pipe 11 allows inflow of heated sanitary water through the second inflow segment 27 and the associated stop valve 33. Litre counter 39 measures the amount of heated sanitary water entering unit 10, 10a and 10b; as an alternative to litre counter 39 can be used a calorie counter.

If the user wishes the delivery of non-heated sanitary water by opening a cold water tap, the sanitary water is delivered through the first distribution segment 22 and preferably the associated stop valve 23.

If the user wishes the delivery of heated sanitary water by opening a hot water tap, the heated sanitary water is delivered through the second distribution segment 24 and preferably the associated stop valve 25.

In the unit 10 and 10b, if the user wishes the delivery of heated sanitary water by opening a hot water tap, the cold sanitary water coming from the first inflow segment 20 and entering inner housing 26 enters mixer 32. At the same time, the heated sanitary water coming from the second inflow segment 27 enters mixer 32. In a manner known in the art, a mixing of the incoming fluids takes place in mixer 32 in order to bring the sanitary water to the temperature desired by the user, and then the mixed sanitary water coming from mixer 32 is delivered through the second distribution segment 24 and the associated stop valve 25.

Accounting of the overall heat consumption is performed by heat metering device 52. The heat carrier fluid cooled in order to supply the heating system with thermal energy enters through inlet branch segment 48 which ends into return segment 30 ending at heat metering device 52. In this manner, the overall heat loss in the heat carrier fluid due to the use of the heating system is perceived.

In the embodiments of the unit for distributing fluids 10, 10a and 10b according to the present invention the flow of sanitary heated water in the recirculation circuit 71, particularly in the regulator valve 72, is regulated by the regulator element 76 of the valve, for example a thermostat, so that the valve is opened and closed automatically depending on the water temperature.

In particular the regulator valve 72 is opened progressively for allowing the passage of the heated sanitary water in the recirculation circuit 71 when the temperature drops below a predetermined value and is closed when the temperature returns to that value; these temperature values are adjustable by the user in a known manner.

For example, the valve opens when the temperature of the heated sanitary water in the recirculation circuit 71 drops below 30°C and closes at 35 degrees °C.

Advantageously, by returning the heated sanitary water in the boiler through the recirculation circuit 71 when the temperature drops below the predetermined value, the hot sanitary water is immediately delivered at the desired temperature.

Advantageously, in embodiments of the unit for distributing fluids 10, 10a and 10b illustrated in the figures, in which the recirculation circuit 71 is connected to the second inflow segment 27 upstream the second counter 39, the heated water that is recirculated without being used by the user is not counted by the counter.

Moreover, the recirculation circuit 71 of the unit for distributing fluids 10, 10a and 10b according to the invention allows a saving of water, which is recycled to the boiler, a saving of calories, because the recycled water is still hot, and a saving of electrical energy, as the recycling pump is activated only for the time strictly necessary for recirculation.

Advantageously, the modular, compact unit for distributing fluids 10, 10a and 10b of the invention, allows the unit to be installed close to the end user and to occupy small space, thus allowing to generate heated sanitary water very quickly, saving the energy used with respect to the solutions of the prior art.

In addition, the modular structure allows for easy installation and corrects any errors in the cutting of the pipes which must be connected to the unit for distributing fluids 10, 10a and 10b.

The technical features distinguishing the different variants and embodiments described and shown from one another can be freely mutually exchanged, provided they are consistent and within the scope of the invention as defined in the claims.

Of course, while keeping the inventive principle unchanged, the embodiments and the construction details can be widely changed with respect to what has been described and shown by way of non-limiting example only, without thereby departing from the scope of the invention as defined in the following claims.

## Claims

1. Unit for distributing fluids (10, 10a, 10b), comprising a main housing (12) which encloses within itself:
- a supply pipe (14) comprising an inflow piping segment (20) arranged to be connected, at its inlet, to a pressurized sanitary water source and a first distribution piping segment (22) intended to deliver cold sanitary water;
- a sanitary heated water supply pipe (11) comprising a second inflow piping segment (27) arranged to be connected, at its inlet, with a source of heated sanitary water under pressure and a second distribution piping segment (24) intended to deliver heated sanitary water;
- a heating circuit (16) comprising a delivery piping segment (28) arranged for being hydraulically connected, at its inlet, to a pressurized heat carrier fluid source, and a return segment (30) arranged for being hydraulically connected, at its outlet, to the heat carrier fluid source;
- an inner housing (26) made of thermally insulating material and enclosed within said main housing (12); said inner housing (26) enclosing within itself said sanitary heated water supply pipe (11) and said heating circuit (16), while leaving outside said first distribution segment (22) and at least the portion of said inflow segment (20) which is located upstream of said first distribution segment (22); **characterized in that** said unit (10, 10a, 10b) further comprises a recirculation circuit (71) with a regulator valve (72) connected, at its inlet, to the second inflow piping segment (27) and, at its outlet, to the pressurized heat carrier fluid source, wherein said recirculation circuit (71) is connected to the second inflow segment (27) upstream of a meter or counter (39) for fluids located in the sanitary heated water supply pipe (11), wherein said recirculation circuit (71) comprises an outlet junction segment (74) connected, at its inlet, with the regulator valve (72) and connected, at its outlet, with a source of heated sanitary water under pressure, and wherein said unit further comprises a regulator element (76) adapted to pilot the regulator valve (72) and adapted to activate a recirculation pump by means of a control device (46).

2. Unit according to claim 1, wherein said first distribution segment (22) and at least the portion of said inflow segment (20) located upstream said first distribution segment (22) are located near a first side face (26a) of said inner housing (26), which face is different and separate from the region through which the heating circuit (16) and the sanitary heated water supply pipe (11) open to the outside.

3. Unit according to claim 2, wherein said heating circuit (16) comprises:
- an outlet branch segment (42) hydraulically located downstream said delivery segment (28) and arranged to be connected upstream one or more radiator devices of an external heating system;
- an inlet branch segment (48) located upstream said return segment (30) and arranged to be hydraulically connected downstream said one or more radiator devices of said external heating system, said outlet branch segment (42) and said inlet branch segment (48) opening to the outside at a side face (26b) of said housing (26) arranged substantially perpendicularly to said first side face (26a).

4. Unit according to claim 3, wherein said heating circuit (16) comprises partition valve means (44) arranged to control the flow of primary hot water entering the outlet branch segment (42).

5. Unit according to any of the preceding claims, wherein said sanitary heated water supply pipe (11) comprises a mixer (32) hydraulically connected upstream the second distribution segment (24) and downstream the first inflow segment (20) and the second inflow segment (27), said mixer being adapted to mix the cold sanitary water from the first inflow segment (20) of the supply pipe (14) with the heated sanitary water from the second inflow segment (27) of the sanitary heated water supply pipe (11).

6. Unit according to any of the preceding claims, wherein said main housing (12) comprises a metal plate (77) coated with a net connected to one of its faces (12a).

7. Unit according to any of the preceding claim 3, or claims 4 to 6, when dependent on at least claim 3, wherein the pipes (11,14) comprise three modules:
- a first module comprising the return segment (30) and the inlet branch segment (48) of the heating circuit (16);
- a second module comprising the delivery segment (28) and the outlet branch segment (42) of the heating circuit (16); and
- a third module comprising the sanitary heated water supply pipe (11), the sanitary cold water supply pipe (14) and the recirculation circuit (71).

8. Unit according to any of claim 3, or claims 4 to 6, when dependent on at least claim 3, wherein the pipes comprise four modules:
- a first module comprising the return segment (30) and the inlet branch segment (48) of the heating circuit (16);
- a second module comprising the delivery segment (28) and the outlet branch segment (42) of the heating circuit (16);
- a third module comprising the sanitary heated water supply pipe (11) and the recirculation circuit (71); and
- a fourth module comprising the sanitary cold water supply pipe (14).

9. Unit according to any of the preceding claims, wherein said regulator valve (72) is a thermoelectric valve.

## Patentansprüche

1. Einheit zur Verteilung von Flüssigkeiten (10, 10a, 10b) mit einem Hauptgehäuse (12), in dem eingeschlossen sind:
- eine Versorgungsleitung (14) mit einem Einlassleitungsabschnitt (20), der dafür ausgelegt ist, an seinem Einlass an eine unter Druck stehende Sanitärwasserquelle angeschlossen zu werden, und einem ersten Verteilleitungsabschnitt (22), der dafür ausgelegt ist, kaltes Sanitärwasser zu liefern,
- eine Versorgungsleitung (11) für erhitztes Sanitärwasser mit einem zweiten Einlassleitungsabschnitt (27), der dafür ausgelegt ist, an seinem Einlass an eine Quelle von erhitztem Sanitärwasser unter Druck angeschlossen zu werden, und einem zweiten Verteilungsleitungsabschnitt (24), der dafür ausgelegt ist, erhitztes Sanitärwasser zu liefern,
- ein Heizkreis (16) mit einem Zuführleitungsabschnitt (28), der dafür ausgelegt ist, hydraulisch an seinem Einlass an eine unter Druck stehende Wärmeträgerflüssigkeitsquelle angeschlossen zu werden, und einem Rückführabschnitt (30), der dafür ausgelegt ist, hydraulisch an seinem Auslass an die Wärmeträgerflüssigkeitsquelle angeschlossen zu werden,
- ein Innengehäuse (26), das aus thermisch isolierendem Material ist und in dem Hauptgehäuse (12) eingeschlossen ist, wobei das Innengehäuse (26) die Versorgungsleitung (11) von erhitztem Sanitärwasser und den Heizkreis (16) umgibt, während der erste Verteilabschnitt (22) und zumindest der Teil des Einlassabschnitts (20), der stromaufwärts von dem ersten Verteilabschnitt (22) angeordnet ist, außerhalb sind,
**dadurch gekennzeichnet, dass** die Einheit (10, 10a, 10b) zusätzlich einen Rezirkulationskreis (71) mit einem Regelventil (72) aufweist, das an seinem Einlass an den zweiten Einlassleitungsabschnitt (27) und an seinem Auslass an die unter Druck stehende Wärmeträgerflüssigkeitsquelle angeschlossen ist, wobei der Rezirkulationskreis (71) an den zweiten Einlassabschnitt (27) stromaufwärts von einem Messgerät oder Zähler (39) für Flüssigkeiten angeschlossen ist, das in der Versorgungsleitung (11) von erhitztem Sanitärwasser angeordnet ist, wobei der Rezirkulationskreis (71) einen Auslassverzweigungsabschnitt (74) aufweist, der an seinem Einlass an das Regelventil (72) und an seinem Auslass an eine Quelle von erhitztem Sanitärwasser unter Druck angeschlossen ist, und
wobei die Einheit zudem ein Regelungselement (72) enthält, das dafür vorgesehen ist, das Regelventil (72) zu steuern und dafür ausgelegt ist, eine Rezirkulationspumpe mittels einer Steuervorrichtung (46) zu aktivieren.

2. Einheit nach Anspruch 1, wobei der erste Verteilabschnitt (22) und zumindest der Teil des Einlassabschnitts (20), der stromaufwärts von dem ersten Verteilabschnitt (22) angeordnet ist, in der Nähe einer ersten Seitenfläche (26a) des Innengehäuses (26) angeordnet sind, wobei diese Fläche verschieden und getrennt von dem Bereich ist, durch den der Heizkreis (16) und die Versorgungsleitung (11) von erhitztem Sanitärwasser nach außen führen.

3. Einheit nach Anspruch 2, wobei der Heizkreis (16) aufweist:
- einen Auslassverzweigungsabschnitt (42), der hydraulisch stromabwärts von dem Zuführabschnitt (28) angeordnet und dafür ausgelegt ist, stromaufwärts an eine oder mehrere Radiatorvorrichtungen eines externen Heizsystems angeschlossen zu werden,
- einen Einlassverzweigungsabschnitt (48), der stromaufwärts von dem Rückführabschnitt (30) angeordnet und dafür ausgelegt ist, hydraulisch stromabwärts an eine oder mehrere Radiatorvorrichtungen des externen Heizsystems angeschlossen zu werden, wobei der Auslassverzweigungsabschnitt (42) und der Einlassverzweigungsabschnitt (48) sich nach außen an einer Seitenfläche (26b) des Gehäuses (26) öffnen, die im Wesentlichen senkrecht zu der ersten Seitenfläche (26a) angeordnet ist.

4. Einheit nach Anspruch 3, wobei der Heizkreis (16) Absperrventilmittel (44) aufweist, die dafür vorgesehen sind, die Strömung von primären Heißwasser, das in den Auslassverzweigungsabschnitt (42) gelangt, zu steuern.

5. Einheit nach einem der vorstehenden Ansprüche, wobei die Versorgungsleitung (11) von erhitztem Sanitärwasser einen Mischer (32) aufweist, der hydraulisch stromaufwärts an den zweiten Verteilabschnitt (24) und stromabwärts an den ersten Einlassabschnitt (20) und den zweiten Einlassabschnitt (27) angeschlossen ist, wobei der Mischer dafür ausgelegt ist, das kalte Sanitärwasser von dem ersten Einlassabschnitt (20) der Versorgungsleitung 14 mit dem erhitzen Sanitärwasser von dem zweiten Einlassabschnitt (27) der Versorgungsleitung (11) von erhitztem Sanitärwasser zu mischen.

6. Einheit nach einem der vorstehenden Ansprüche, wobei das Hauptgehäuse (12) eine Metallplatte (77) aufweist, die mit einem Netz überzogen ist, das mit einer ihrer Flächen (12a) verbunden ist.

7. Einheit nach einem der vorstehenden Ansprüche 3 oder 4 bis 6, wenn sie zumindest auf Anspruch 3 rückbezogen sind, wobei die Leitungen (11, 14) drei Module enthalten:
- ein erstes Modul, das den Rückführabschnitt (30) und den Einlassverzweigungsabschnitt (48) des Heizkreises (16) enthält,
- ein zweites Modul, das den Zuführabschnitt (28) und den Auslassverzweigungsabschnitt (42) des Heizkreises (16) enthält, und
- ein drittes Modul, das die Versorgungsleitung (11) von erhitztem Sanitärwasser, die Versorgungsleitung (14) von kaltem Sanitärwasser und den Rezirkulationskreis (71) enthält.

8. Einheit nach einem der Ansprüche 3 oder 4 bis 6, wenn diese zumindest auf Anspruch 3 rückbezogen sind, wobei die Leitungen vier Module enthalten:
- ein erstes Modul, das den Rückführabschnitt (30) und den Einlassverzweigungsabschnitt (48) des Heizkreises (16) enthält,
- ein zweites Modul, das den Zuführabschnitt (28) und den Auslassverzweigungsabschnitt (42) des Heizkreises (16) enthält,
- ein drittes Modul, das die Versorgungsleitung (11) von erhitztem Sanitärwasser und den Rezirkulationskreis (71) enthält, und
- ein viertes Modul, das die Versorgungsleitung (14) von kaltem Sanitärwasser enthält.

9. Einheit nach einem der vorstehenden Ansprüche, wobei das Regelventil (72) ein thermoelektrisches Ventil ist.

## Revendications

1. Unité de distribution de fluides (10, 10a, 10b), comprenant un logement principal (12) qui renferme en son sein :
- un tuyau d'adduction (14) comprenant un segment de tuyauterie d'admission (20) agencé pour être relié, à son entrée, à une source d'eau sanitaire pressurisée et un premier segment de tuyauterie de distribution (22) destiné à délivrer de l'eau froide sanitaire ;
- un tuyau d'adduction d'eau chaude sanitaire (11) comprenant un second segment de tuyauterie d'admission (27) agencé pour être relié, à son entrée, à une source d'eau chaude sanitaire sous pression et un second segment de tuyauterie de distribution (24) destiné à délivrer de l'eau chaude sanitaire ;
- un circuit de chauffage (16) comprenant un segment de tuyauterie de délivrance (28) agencé pour être hydrauliquement relié, à son entrée, à une source de fluide caloporteur pressurisé, et un segment de retour (30) agencé pour être hydrauliquement relié, à sa sortie, à la source de fluide caloporteur ;
- un logement interne (26) constitué d'un matériau thermiquement isolant et enfermé au sein dudit logement principal (12) ; ledit logement interne (26) renfermant en son sein ledit tuyau d'adduction d'eau chaude sanitaire (11) et ledit circuit de chauffage (16), tout en laissant à l'extérieur ledit premier segment de distribution (22) et au moins la portion dudit segment d'admission (20) qui est située en amont dudit premier segment de distribution (22) ;
**caractérisée en ce que** ladite unité (10, 10a, 10b) comprend en outre un circuit de recirculation (71) avec une vanne régulatrice (72) reliée, à son entrée, au second segment de tuyauterie d'admission (27) et, à sa sortie, à la source de fluide caloporteur pressurisé, dans laquelle ledit circuit de recirculation (71) est relié au second segment d'admission (27) en amont d'un appareil de mesure ou compteur (39) pour fluides situé dans le tuyau d'adduction d'eau chaude sanitaire (11), dans lequel ledit circuit de recirculation (71) comprend un segment de jonction de sortie (74) relié, à son entrée, à la vanne régulatrice (72) et relié, à sa sortie, à une source d'eau chaude sanitaire sous pression, et
dans laquelle ladite unité comprend en outre un élément régulateur (76) adapté pour piloter la vanne régulatrice (72) et adapté pour activer une pompe de recirculation au moyen d'un dispositif de commande (46).

2. Unité selon la revendication 1, dans laquelle ledit premier segment de distribution (22) et au moins la portion dudit segment d'admission (20) située en amont dudit premier segment de distribution (22) sont situés près d'une première face latérale (26a) dudit logement interne (26), laquelle face est différente et séparée de la région à travers laquelle le circuit de chauffage (16) et le tuyau d'adduction d'eau chaude sanitaire (11) débouchent sur l'extérieur.

3. Unité selon la revendication 2, dans laquelle ledit circuit de chauffage (16) comprend :
- un segment de branche de sortie (42) situé hydrauliquement en aval dudit segment de délivrance (28) et agencé pour être relié en amont d'un ou de plusieurs dispositifs radiateurs d'un système de chauffage externe ;
- un segment de branche d'entrée (48) situé en amont dudit segment de retour (30) et agencé pour être relié hydrauliquement en aval desdits un ou plusieurs dispositifs radiateurs dudit système de chauffage externe, ledit segment de branche de sortie (42) et ledit segment de branche d'entrée (48) débouchant sur l'extérieur au niveau d'une face latérale (26b) dudit logement (26) agencée sensiblement perpendiculairement à ladite première face latérale (26a).

4. Unité selon la revendication 3, dans laquelle ledit circuit de chauffage (16) comprend des moyens de vanne de cloisonnement (44) agencés pour commander le flux d'eau chaude primaire entrant dans le segment de branche de sortie (42).

5. Unité selon l'une quelconque des revendications précédentes, dans laquelle ledit tuyau d'adduction d'eau chaude sanitaire (11) comprend un mélangeur (32) relié hydrauliquement en amont du second segment de distribution (24) et en aval du premier segment d'admission (20) et du second segment d'admission (27), ledit mélangeur étant adapté pour mélanger l'eau froide sanitaire provenant du premier segment d'admission (20) du tuyau d'adduction (14) avec l'eau chaude sanitaire provenant du second segment d'admission (27) du tuyau d'adduction d'eau chaude sanitaire (11).

6. Unité selon l'une quelconque des revendications précédentes, dans laquelle ledit logement principal (12) comprend une plaque de métal (77) revêtue d'une grille reliée à l'une de ses faces (12a).

7. Unité selon l'une quelconque de la revendication 3, ou des revendications 4 à 6 précédentes, lorsqu'elles dépendent d'au moins la revendication 3, dans laquelle les tuyaux (11, 14) comprennent trois modules :
- un premier module comprenant le segment de retour (30) et le segment de branche d'entrée (48) du circuit de chauffage (16) ;
- un deuxième module comprenant le segment de délivrance (28) et le segment de branche de sortie (42) du circuit de chauffage (16) ; et
- un troisième module comprenant le tuyau d'adduction d'eau chaude sanitaire (11), le tuyau d'adduction d'eau froide sanitaire (14) et le circuit de recirculation (71).

8. Unité selon l'une quelconque de la revendication 3, ou des revendications 4 à 6, lorsqu'elles dépendent au moins de la revendication 3, dans laquelle les tuyaux comprennent quatre modules :
- un premier module comprenant le segment de retour (30) et le segment de branche d'entrée (48) du circuit de chauffage (16) ;
- un deuxième module comprenant le segment de délivrance (28) et le segment de branche de sortie (42) du circuit de chauffage (16) ;
- un troisième module comprenant le tuyau d'adduction d'eau chaude sanitaire (11) et le circuit de recirculation (71) ; et
- un quatrième module comprenant le tuyau d'adduction d'eau froide sanitaire (14).

9. Unité selon l'une quelconque des revendications précédentes, dans laquelle ladite vanne régulatrice (72) est une vanne thermoélectrique.
